# EUROPEAN PATENT APPLICATION

(11) **EP 1 738 734 A2**
(43) Date of publication of application: **03.01.2007**
(21) Application number: 06116187.3
(22) Date of filing: 28.06.2006
(51) Int. Cl.: A61G 5/06

(54) **Powered tripod wheel assembly, in particular for a wheelchair, and wheelchair featuring such a wheel assembly**

(30) Priority: 28.06.2005 IT TO20050451
(71) Applicant: D Cubed S.r.l., 10143 Torino (IT)
(72) Inventor: Bambara, Pietro, 10134 Torino (IT); Molari, Aurelio, 10025 Pino Torinese (IT)
(74) Representative: Jorio, Paolo

(57) **Abstract**

A powered tripod wheel assembly (11; 11a, 12a) has three wheels (5; 5a, 6a) fitted to a support (16; 16a, 17a) and equally spaced about a horizontal central axis (13; 13a, 14a); the wheels are powered to rotate about respective eccentric axes (7; 7a, 8a) parallel to the central axis (13; 13a, 14a), and the support (16; 16a, 17a) is also powered to rotate about the central axis (13; 13a, 14a).

## Description

The present invention relates to a powered tripod wheel assembly, in particular for a wheelchair, to which the following description refers purely by way of example.

Wheelchairs are known comprising three or four wheels, which are at least partly powered to run on flat surfaces, with no helper required, under direct control of the user seated in the wheelchair.

Known powered wheelchairs, however, are not altogether satisfactory, by being unable to climb up or down steps without the assistance of a helper. Moreover, even negotiating one step, as frequently required along outdoor routes, calls for the assistance of a helper to push the chair, or for considerable manual force on the wheels by the user.

To eliminate the above drawbacks, wheelchairs can be equipped with powered tracks. These, however, have the drawback of sliding, and so leaving scuff marks, on the floor when steering.

Wheelchairs are also known comprising tripod wheel assemblies, i.e. wheel assemblies comprising a support rotating idly about a central axis, and three wheels fitted 120° apart to the support and rotating about respective axes eccentric with respect to the support, though these still require a helper to climb up or down steps.

It is an object of the present invention to provide a powered tripod wheel assembly designed to provide a straightforward, low-cost solution to the above problems, and which preferably enables a wheelchair to climb up and down steps stably and with ease, with no need for a helper, and without sliding on supporting surfaces or floors.

According to the present invention, there is provided a powered tripod wheel assembly, as claimed in Claim 1.

A non-limiting embodiment of the invention will be described by way of example with reference to the accompanying drawings, in which:
Figure 1 shows a view in perspective of a preferred embodiment of a powered tripod wheel assembly in accordance with the present invention and applied to a powered wheelchair;
Figure 2 shows a larger-scale detail of the Figure 1 wheelchair;
Figure 3 shows a larger-scale view, with parts removed for clarity, of the Figure 1 wheel assembly;
Figures 4 to 6 show schematic side views of the Figure 1 wheelchair in different operating conditions;
Figure 7 shows a front view in perspective, with parts removed for clarity, of a variation of the wheel assembly and wheelchair in Figure 1;
Figure 8 shows the same view as in Figure 7, of the Figure 7 wheelchair in a different operating condition.

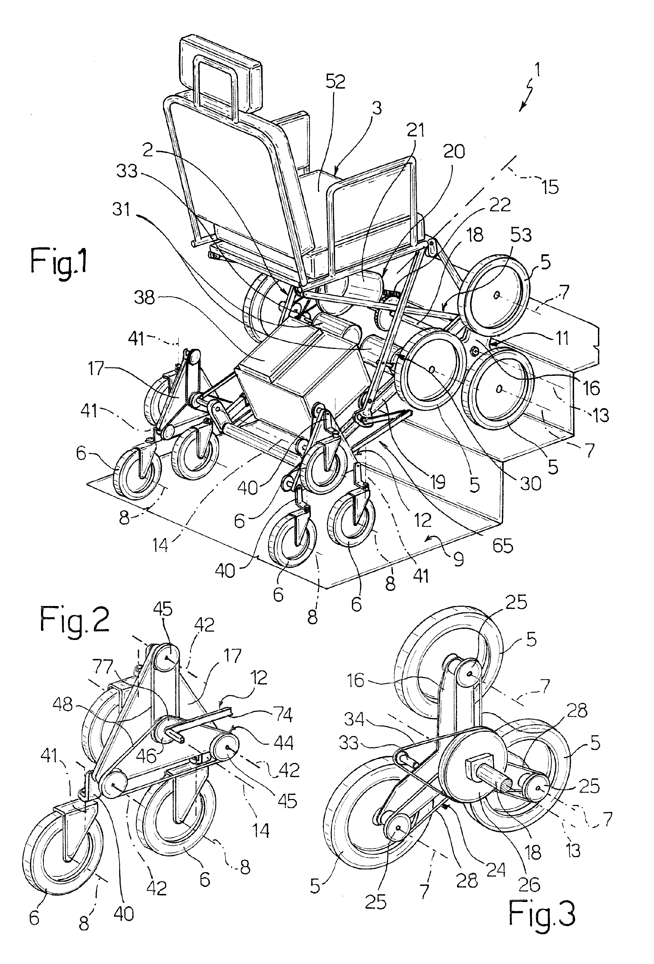

Number 1 in Figure 1 indicates a powered wheelchair comprising a frame 2; a chair 3 supported by frame 2; and six front wheels 5 and six rear wheels 6 having and rotating about respective axes 7, 8 to roll on a supporting surface 9.

Wheels 5, 6 form part of two front wheel assemblies 11 and two rear wheel assemblies 12, by which wheels 5, 6 revolve in a circle, with respect to frame 2, about a horizontal front axis 13 and, respectively, about a horizontal rear axis 14, both perpendicular to a longitudinal travelling direction 15.

Each assembly 11, 12 comprises a pair of plates 16, 17 located on opposite sides of frame 2 and hinged to frame 2 about respective axis 13, 14. Each plate 16, 17 supports three wheels 5, 6, which are eccentric with respect to axis 13, 14 and fitted 120° apart to plate 16, 17, More specifically, each assembly 11, 12 is known as a "tripod", by comprising three supporting points defined by the three wheels 5, 6 and which are brought cyclically into contact with surface 9 as the wheels revolve about axis 13, 14.

Assemblies 11 comprise an axle 18, which extends along axis 13, connects plates 16 coaxially and in angularly fixed manner to each other, is hinged about axis 13 to a base 19 of frame 2, and is rotated by an actuating device 20 to revolve wheels 5 as described above. Device 20 comprises an electric motor 21 fixed to base 19; and an irreversible drive 22, in particular a worm and helical gear drive, interposed between motor 21 and axle 18.

With reference to Figure 3, wheels 5 are hinged to plates 16 about respective axes 7, and, on each plate 16, are connected angularly to one another by a belt or chain drive 24.

Drive 24 comprises, for each wheel 5, a peripheral pulley 25 coaxial with and fixed angularly to wheel 5 and located on the opposite side of plate 16; and a number of central pulleys fitted in rotary manner to axle 18 and fitted coaxially and in angularly fixed manner to one another. Of the central pulleys, only one is visible and indicated 26, while the ones not visible are defined by respective sun gears substantially coplanar with the three pulleys 25, and which rotate pulleys 25 by means of respective belts or chains 28, and with the same velocity ratio for all three wheels 5.

Each pulley 26 is rotated by a respective actuating device 30 controlled to make drive wheels of wheels 5, and which comprises an electric motor 31 fixed to base 19 and powering a respective irreversible drive (not shown) having an output wheel or pinion 33 rotating about an axis parallel to axle 18. Each device 30 also comprises a drive belt or chain 34 meshing with pinion 33 and pulley 26.

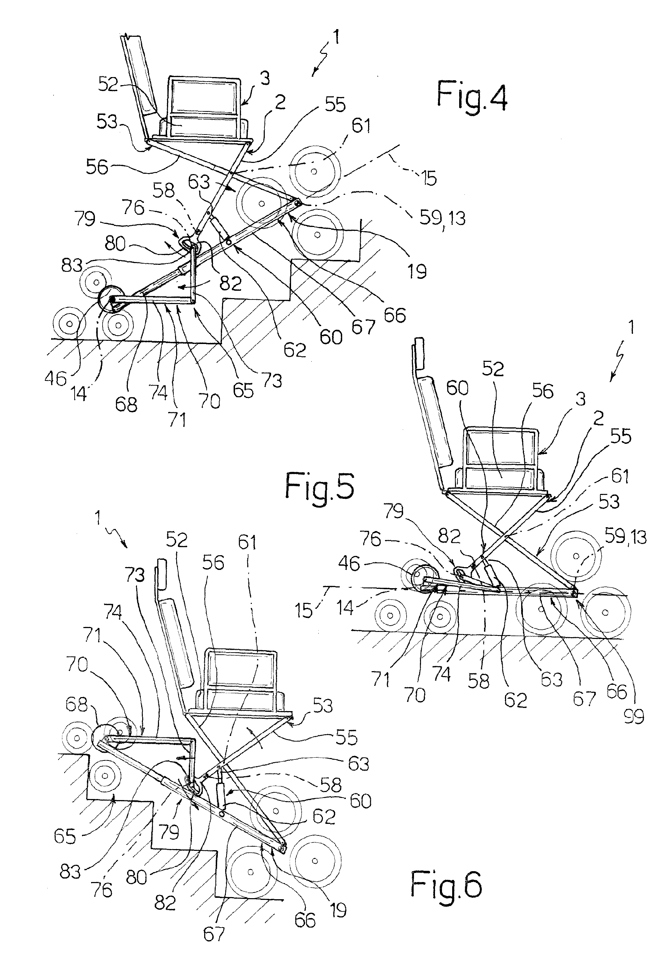

When travelling in a straight line on flat surface 9 (Figure 5), a user-controlled central control unit (not shown) runs both motors 31 at the same speed, while motor 21 is stopped in such a position as to maintain plates 16 in a predetermined angular position, in which only one wheel 5 on each side of wheelchair 1 contacts surface 9, with no particular braking provisions required, by virtue of the irreversible nature of drive 22. When steering on a flat surface, the central control unit runs motors 31 at different speeds.

When travelling forward up or down steps 37, the central control unit runs motor 21 and stops motors 31. In this last operative condition, by virtue of the irreversible drives of devices 30, pulleys 26 are also stopped with respect to base 19, whereas axle 18, and therefore plates 16, rotate together about axis 13. At the same time, drives 24 allow wheels 5 to rotate, with respect to plates 16, about respective axes 7 by the same but opposite angle to that about axis 13, to keep wheels 5 parallel to themselves with respect to a fixed external reference as they revolve.

As shown in Figure 1, motors 31, 21 are powered electrically by a number of batteries 38 supported by base 19 under chair 3. Assembly 11 has a known mechanical clutch (not shown) by which to rotate wheels 5 idly to push the wheelchair or when batteries 38 are run down; and electric or electromagnetic brake systems (not shown) on motors 21, 31 and/or mechanical brake systems. And axle 18 has a joint (not shown), e.g. a shock-absorbing joint, to compensate for minor horizontal oscillations of plates 16 and/or to reduce any on-road vertical acceleration.

Wheels 6 of each assembly 12 are suspended with respect to plate 17, are fitted to respective brackets 40, with respect to which they rotate idly about respective axes 8, and pivot idly 360° about respective vertical axes 41.

With reference to Figure 2, axes 41 are oblique with respect to axes 8, and are maintained parallel to one another and perpendicular to surface 9. The top ends of brackets 40 are hinged to plates 17 about respective axes 42 parallel to and equally spaced about axis 14.

Brackets 40 of each plate 17 are connected angularly to one another by a drive 44, which is similar to drive 24 and comprises, for each wheel 6, a peripheral pulley 45 fixed angularly to bracket 40 about axis 42 and located on the opposite side of plate 17. Drive 44 also comprises two central pulleys or sun gears 46, which are fixed to each other, are coaxial with plate 17 along axis 14, are hinged to plate 17, and are secured angularly to frame 2 as explained in detail below. Sun gears 46 are substantially coplanar with pulleys 45, and are connected to pulleys 45 by respective belts or chains 48, with the same velocity ratio for all three wheels 6.

Maintaining sun gears 46 angularly fixed, brackets 40 rotate with respect to plates 17 about respective axes 42 by the same but opposite angle to that of wheels 6 revolving about axis 14, so as to keep axes 41 parallel to themselves with respect to an external reference.

As opposed to being powered, as in assembly 11, the revolving movement of wheels 6 is idle and produced automatically when one of wheels 6 encounters a step going up, or the void going down, along the longitudinal path of wheelchair 1. At the same time, when steering on flat surfaces using motors 31, wheels 6 pivot automatically about respective axes 41, depending on the turn direction of wheelchair 1.

With reference to Figures 1, 4, 5 and 6, chair 3 comprises a seat 52 connected to base 19 by a bar-link drive 53, which allows chair 3, and therefore the centre of gravity of wheelchair 1, to move back and forth with respect to base 19 in a vertical centre plane containing direction 15, while at the same time keeping seat 52 horizontal.

On each side of wheelchair 1, drive 53 comprises two straight, crossed rods 55, 56 of different lengths hinged at the ends to seat 52 and base 19 about horizontal axes perpendicular to direction 15. More specifically, rods 55 and 56 slope upwards and downwards, respectively, in the travelling direction of wheelchair 1, and are hinged to fixed points of base 19 about respective axes 58 and 59.

Chair 3 is rotated by an actuating device 60 about an instantaneous axis of rotation 61 (defined by the intersection of rods 55, 56) with respect to base 19 and in the opposite direction to the tilt of wheelchair 1, i.e. clockwise when the wheelchair is tilted up, and anticlockwise when the wheelchair is tilted down (Figures 4 and 6), so as to keep seat 52 of chair 3 horizontal at all times. At the same time, axis 61 moves forwards when going up, and backwards when going down.

Device 60 comprises an electric motor 62 having a casing hinged to a fixed point of base 19; and a screw-nut screw drive (not shown) powered by motor 62 to move a rod 63 hinged at the end to rod 55. As shown clearly, extraction and withdrawal of rod 63 rotate rod 55 about axis 58 anticlockwise (Figure 6) and clockwise (Figure 4) respectively, and move instantaneous axis of rotation 61 backwards and forwards respectively, thus moving the centre of gravity of and rotating chair 3.

With reference to Figures 4 to 6, wheelchair 1 also comprises an adjusting assembly 65 for adjusting the wheelbase between axes 13 and 14. Assembly 65 comprises two extendable telescopic rails 66, which form part of base 19, are located along the sides of frame 2, and comprise respective front guides 67, supporting plates 16 and drive 53, and respective rear slides 68 supporting plates 17 and sliding longitudinally inside guides 67.

Assembly 55 also comprises a drive 70 on each side of frame 2 to move out slides 68 and increase the wheelbase between axes 13 and 14 when wheelchair 1 is tilted up and down. With reference, for the sake of simplicity, to one side of frame 2, drive 70 comprises a connecting rod-and-crank lever mechanism 71, in turn comprising a crank 73 and a connecting rod 74 hinged to each other at one end. The crank small end is hinged to guides 67 about an axis 76 parallel and adjacent to axis 58, and the small end 77 (Figure 2) of the connecting rod is hinged to slides 68 about axis 14.

Drive 70 also comprises a toothed coupling 79 for rotating crank 73 about axis 76 when drive 53 is moved by device 60. Toothed coupling 79 comprises an internally toothed sector gear 80 extending about axis 58 and fixed to an extension 82 of rod 55 beyond axis 58; and a pinion 83, which extends along axis 76, is fixed to the crank small end, and meshes with sector gear 80.

When wheelchair 1 rests on a flat horizontal surface 9, pinion 83 engages an intermediate point of sector 80, and connecting rod 74 and crank 73 are set to a rest position substantially corresponding to the top dead centre position of lever mechanism 71 (Figure 5) to keep slides 68 withdrawn. When the wheelchair is tilted up or down, rotation of rod 55 about axis 58 rocks sector gear 80 and so rotates crank 73 about axis 76 clockwise (Figure 4) and anticlockwise (Figure 6) respectively. Rotation of crank 73 in either direction pushes the small end of connecting rod 77 longitudinally backwards, thus extracting slides 68 and moving axis 14 rearwards to increase the wheel base.

As shown in Figures 4 to 6, connecting rod 74 rotates about axis 14 in the opposite direction to the up or down tilt of frame 2 with respect to the horizontal. Device 60 is controlled by the central control unit to operate drives 53, and therefore 70, gradually, i.e. to move chair 3 and increase the wheelbase in proportion to the tilt angle of frame 2 with respect to the horizontal.

More specifically, lever mechanism 71 is designed to rotate connecting rod 74 about axis 14 by an angle substantially equal to but opposite the tilt angle of wheelchair 1 on steps 37, so that connecting rod 74 tends to maintain substantially the same orientation with respect to a fixed external reference as wheelchair 1 is tilted.

When slides 68 are fully extracted to the maximum wheelbase, crank 73, with respect to its original rest position, is perpendicular to connecting rod 74, and connecting rod 74 is rotated about axis 14 by an angle of roughly 30° corresponding to the normal maximum gradients of steps in buildings.

Again with reference to one side of frame 2, connecting rod 74 is connected, in an angularly fixed position about axis 14, to sun gears 46 of drive 44, so as to only rotate sun gears 46 with respect to base 19 when device 60 is operated when wheelchair 1 is tilted up or down. In addition to increasing the wheelbase, drive 70 therefore also provides for adjusting the orientation of sun gears 46.

More specifically, connecting rod 74 rotates sun gears 46 about axis 14 by an angle substantially equal to but opposite the up or down tilt angle of frame 2, so that sun gears 46 maintain substantially the same orientation with respect to a fixed external reference as wheelchair 1 is tilted, and axes 41 are maintained vertical at all times and perpendicular to the treads of steps 37.

In a variation not shown, the small end of connecting rod 77 is hinged to slides 68 about an axis parallel to axis 14, and adjusts the orientation of sun gears 46 about axis 14 with the interposition of a further transmission lever mechanism.

In a further variation not shown, wheelchair 1 is equipped with a system for locking angular adjustment of chair 3 for road gradients of -5° to +5° to the horizontal.

To sum up, with reference to Figure 4 showing the wheelchair climbing steps 37, wheelchair 1 stops by arresting pulleys 26 on reaching the first step, and, after an "up" control is operated, axle 18 begins rotating about axis 13 to revolve wheels 5 and bring the wheel 5 formally at the top of plate 16 to rest on the first step.

At the same time, chair 3 begins pitching forward, thus increasing the wheelbase and orienting sun gears 46, while wheels 5 retain a certain amount of drive torque to prevent backward slide of wheelchair 1 in the absence of an irreversible worm drive.

Figure 6 shows the wheelchair descending steps 37. When a "down" control is operated, pulleys 26 stop, and axle 18 begins rotating to revolve wheels 5 about axis 13 and bring the wheel 5 formerly at the top of plate 16 to rest on the next step. At the same time, chair 3 begins rolling backwards, thus increasing the wheelbase and orienting sun gears 46, while wheels 5 retain a certain amount of drive torque to prevent forward slide.

Climbing/descent and adjustment of the wheelbase, of the position of chair 3, and of the orientation of sun gears 46, continue automatically one step after another; and, on reaching the top/bottom of the steps, the original flat operating conditions are gradually restored.

Other operating characteristics will be clear from the above description of the various component parts of wheelchair 1.

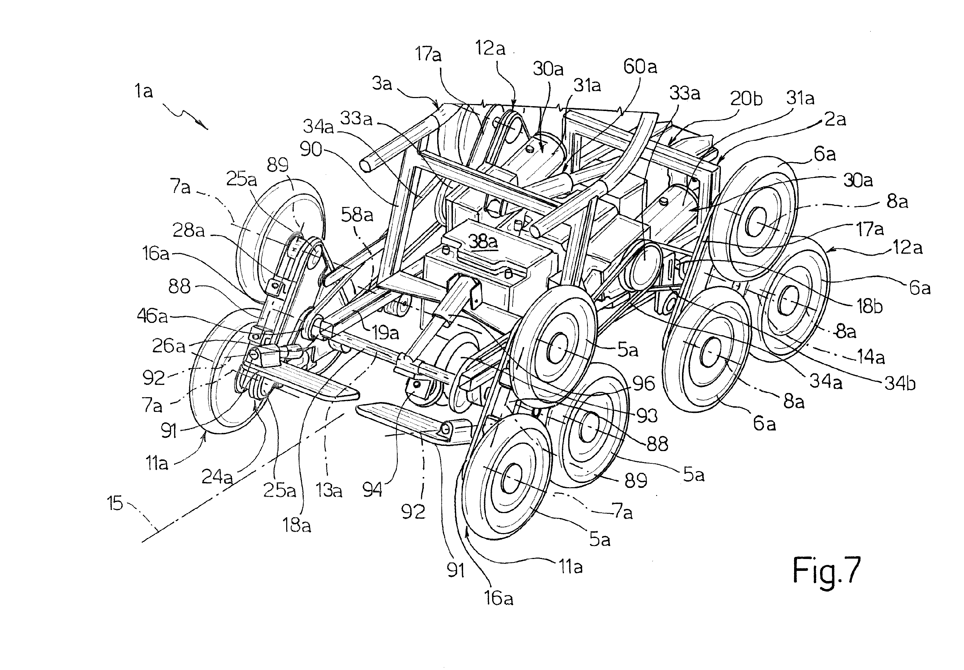

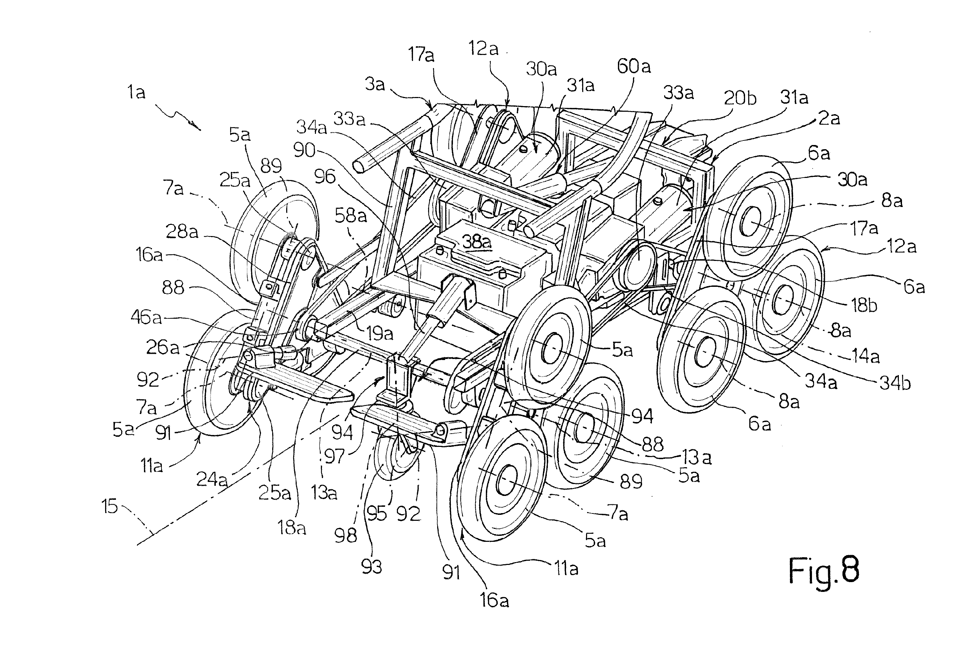

Figures 7 and 8 show a variation of wheelchair 1, the component parts of which are indicated, where possible, using the same reference numbers as in Figures 1-6, followed by the letter "a". Wheel assemblies 11a, 12a are substantially identical, and differ from assemblies 11 solely by drive 24a comprising one sun gear 46a fixed with respect to pulley 26a and coplanar with pulleys 25a, and one toothed belt or chain 28a which meshes simultaneously with all three pulleys 25a and sun gear 46a. Wheels 6a are hinged directly to plates 17a about respective axes 8a equally spaced about axis 14a. The two motors 31a, one for the right assemblies 11a, 12a and the other for the left assemblies 11a, 12a, rotate wheels 5a, 6a about axes 7a, 8a by means of respective front belts or chains 34a and respective rear belts or chains 34b.

Assemblies 11a differ from assemblies 12a solely by each plate 16a supporting three rollers 88, which are located in the space between the periphery of wheels 5a, rotate idly about respective axes 89 perpendicular to axes 7a, and project radially from plates 16a. Rollers 88 rest on the edge of the steps at the start of the climb, when the travelling direction of wheelchair 1a is not perfectly aligned with the steps, and allow the front of wheelchair 1a to slide transversely into correct alignment when the right and left rear wheels 6a are operated at slightly different speeds.

In addition to front axle 18a (powered in a manner not shown), a rear axle 18b is also powered by a device 20b, similar to device 20, to rotate plates 17a about axis 14a and revolve wheels 6a about axis 14a.

Wheelchair 1a has no adjustment of the wheelbase between axes 13a and 14a. Moreover, in place of the drive 53 connection, chair 3a (shown partly) comprises a frame 90 hinged to base 19a about a horizontal axis 58a perpendicular to direction 15, and is rotated by an actuator 60a, e.g. similar to device 60 described above, to keep the seat horizontal when climbing/descending steps.

In a manner not shown in detail, frame 90 is fitted with two footrests 91, which rotate idly, with respect to frame 90 and about respective longitudinal axes 92, between a raised lateral position (not shown) and a lowered work position, and rotate together with chair 3a about axis 58a.

Wheelchair 1a is moved up and down steps by powering both axles 18a, 18b to revolve wheels 5a, 6a in the same way as described for assemblies 11. To move in a straight line on flat surfaces, the same considerations as for assemblies 11 apply, while an extra retractable front central wheel 93 is provided for steering on flat surfaces.

More specifically, wheel 93 is hinged to a support 94 to rotate idly about a respective axis 95; and support 94 in turn is hinged to axle 18 and operated by an actuator 96 to swing wheel 93, with respect to base 19a, between a lowered position, in which wheel 93 rests on the ground and lifts wheels 5 off the ground (Figure 8), and a raised or withdrawn rest position (Figure 7). Support 94 also has a hinge 97 to allow wheel 93 to pivot idly 360° about an axis 98, which is substantially vertical when wheel 93 is lowered. When steering, the central control unit operates motors 31a at different speeds to produce a difference in speed between the left and right wheels 6a, and wheel 93 is oriented automatically according to the direction imposed by the speed difference.

In combination with or instead of manual control, all the movements and adjustments may be performed and/or controlled automatically on the basis of sensor devices (not shown). In particular, sensors are provided, e.g. on footrests 91, to detect any obstacles or steps and automatically control the revolving movement of the wheels.

As will be clear from the above description, powering assemblies 11, 11a, 12a to rotate wheels 5, 5a, 6a and axles 18, 18a, 18b allows wheelchair 1, 1a to climb/descend steps and to travel on flat surfaces with no helper required.

Moreover, providing four "tripods", two for front axis 13, 13a and two for rear axis 14, 14a, combined with powered assemblies 11, 11a, 12a, ensures contact with the steps is maintained at all times, i.e. no skipping between one step and the next.

Using wheels as opposed to tracks prevents sliding and scuff marks on the floor, and keeping only one of the three drive wheels 5 or 6 of each assembly 11 or 12a in contact with the floor makes steering on flat surfaces easier and prevents sliding on the floor.

Drives 24, 44, 24a locked by the respective sun gears permit optimum control of rotation of wheels 5, 6, 5a, 6a about respective axes 7, 8, 7a, 8a and with respect to a fixed external reference when climbing and descending steps, prevent sliding, and allow torque transmission to the steps to prevent wheelchair 1 from sliding backwards or forwards respectively.

Adjusting the position of the centre of gravity of chair 3, increasing the wheelbase, and keeping axes 41 vertical all times, ensure stable climbing and descent of steps by the user of wheelchair 1. Despite the numerous adjustments involved, wheelchair 1 is relatively compact and lightweight : one actuator 62, in fact, adjusts the angle of chair 3, moves the centre of gravity forwards/backwards, increases/reduces the wheelbase, and tilts axes 41.

Other advantages will be clear from the above description of the various component parts of wheelchairs 1 and 1a.

Clearly, changes may be made to wheelchair 1, 1a, as described herein with reference to the accompanying drawings, without, however, departing from the scope of the present invention.

In particular, wheels 5, 6, 5a, 6a may be rotated or revolved otherwise than as described, e.g. by means of epicyclic gear trains, and/or may perform other than a circular, e.g. an elliptical, revolving movement by means of appropriate guides.

Wheels 5, 6, 5a, 6a may be supported by members other than plates 16, 17, 16a, 17a described.

The wheelbase may be increased, sun gears 46 may be oriented, and chair 3 may be adjusted by independent actuators or by drives other than those described by way of example; and provision may be made for reducing as opposed to increasing the wheelbase, e.g. when steering or for elevator transport.

The front wheels may pivot and the rear wheels be drive wheels (as in wheelchair 1a) and/or the centre of gravity of chair 3 may be lowered in addition to being moved backwards and forwards.

An adjusting assembly may also be provided to increase the track between the sides of wheelchair 1, 1a for even greater stability when climbing or descending steps.

Finally, assembly 11, 11a, 12a may be applied to transportation means other than a wheelchair, e.g. trolleys.

## Claims

1. A powered tripod wheel assembly (11; 11a, 12a) comprising:
- supporting means (16; 16a, 17a), and
- three wheels (5; 5a, 6a), which are fitted to said supporting means (16; 16a, 17a) eccentrically about a central axis (13; 13a, 14a), rotate with respect to said supporting means (16; 16a, 17a) about respective eccentric axes of rotation (7; 7a, 8a) parallel to said central axis (13; 13a, 14a), and revolve with respect to an external reference about said central axis (13; 13a, 14a);
**characterized by** also comprising:
- first actuating means (30; 30a) for rotating the three wheels (5; 5a, 6a) about the respective eccentric axes of rotation (7; 7a, 8a); and
- second actuating means (20; 20b) for revolving the three wheels (5; 5a, 6a) about said central axis (13; 13a, 14a).

2. A wheel assembly as claimed in Claim 1, **characterized in that** said supporting means (16; 16a, 17a) are rotated about said central axis (13; 13a, 14a) by said second actuating means (20; 20b).

3. A wheel assembly as claimed in Claim 2, **characterized in that** said supporting means (16a) are fitted with three rollers (88) which are located in the space between the periphery of said wheels (5a), rotate idly about respective axes (89) perpendicular to said eccentric axes of rotation (7a), and project radially from said supporting means (16a).

4. A wheel assembly as claimed in any one of Claims 1 to 3, **characterized by** comprising drive means (24; 24a) for transmitting rotation from said first actuating means (30; 30a) to all three wheels (5; 5a, 6a) with the same velocity ratio.

5. A wheel assembly as claimed in Claim 4, **characterized in that** said drive means (24; 24a) are configurable to rotate the three wheels (5; 5a, 6a), as the wheels revolve, about the respective eccentric axes of rotation (7; 7a, 8a) and with respect to said supporting means (16; 16a, 17a) by an angle equal and opposite to that about said central axis (13; 13a, 14a).

6. A wheel assembly as claimed in Claim 5, **characterized in that** said drive means (24; 24a) comprise a drive member (46a) connected to the three wheels (5; 5a, 6a) and lockable angularly.

7. A wheel assembly as claimed in Claim 6, **characterized in that** said drive member comprises at least one sun gear (46a) coaxial with said central axis (13; 13a, 14a) and rotating about said central axis (13; 13a, 14a) with respect to said supporting means (16; 16a, 17a); said drive means (24; 24a) also comprising:
- for each wheel (5; 5a, 6a), a peripheral pulley (25; 25a) coaxial with and fixed angularly to the wheel (5; 5a, 6a);
- at least one belt or chain (28; 28a) meshing with said sun gear and with at least one relative peripheral pulley (25; 25a).

8. A wheel assembly as claimed in Claim 7, **characterized in that** said drive means (24a) comprise one belt or chain (28a) meshing with said sun gear (46a) and with all three said peripheral pulleys (25a).

9. A wheel assembly as claimed in Claim 7 or 8, **characterized in that** said drive means (24; 24a) comprise a central pulley (26; 26a) coaxial and angularly integral with said sun gear and operated by said first actuating means (31) by means of a drive belt or chain (34; 34a, 34b).

10. A wheel assembly as claimed in any one of the foregoing Claims, **characterized by** comprising first control means for so positioning the three wheels (5; 5a, 6a) about said central axis (13; 13a, 14a) that only one wheel contacts a supporting surface (9) when travelling on a flat surface in a travelling direction (15) perpendicular to said central axis (13; 13a, 14a).

11. A wheel assembly as claimed in any one of the foregoing Claims, **characterized in that** said first and second actuating means (30, 20) comprise respective separate motors.

12. A wheel assembly as claimed in Claim 11, **characterized in that** said first and second actuating means (30, 20) comprise respective irreversible drives.

13. A wheel assembly as claimed in Claim 12, **characterized in that** said second actuating means (20) comprise a single electric motor (21), and a worm and helical gear drive (22) interposed between said electric motor (21) and said central axis (13).

14. A wheel assembly as claimed in any one of the foregoing Claims, **characterized by** comprising:
- sensor means for detecting an obstacle or a step in a travelling direction (15) perpendicular to said central axis (13; 13a, 14a); and
- second control means for automatically controlling said second actuating means (20; 20b) and revolving the wheels as a function of the findings of said sensor means.

15. A powered means of transport (1; 1a) comprising a frame (2; 2a) defining a front axis (13; 13a) and a rear axis (14; 14a), both horizontal and perpendicular to a travelling direction (15); and a first pair of powered tripod wheel assemblies (11; 11a, 12a) associated with one (13; 13a, 14a) of said front and rear axes and as claimed in any one of the foregoing Claims.

16. A means of transport as claimed in Claim 15, **characterized by** comprising a second pair of powered tripod wheel assemblies (11a, 12a) associated with the other (13a, 14a) of said front and rear axes and as claimed in any one of Claims 1 to 13.

17. A means of transport as claimed in Claim 16, **characterized by** comprising a front direction wheel movable between a withdrawn rest position, and an extracted position in which it rests on the ground, lifts the front powered wheel assemblies off the ground, rotates idly about a respective axis, and pivots idly about a vertical axis.

18. A means of transport as claimed in Claim 15, **characterized by** comprising a pair of idle tripod wheel assemblies (12) associated with the other (14) of said front and rear axes, and each comprising:
- three direction wheels (6) spaced 120° apart, rotating idly about respective axes of rotation (7), and pivoting idly about respective steering axes (41);
- a supporting member (17) rotating idly about the front/rear axis (14) to impart a revolving movement to said direction wheels (6); and
- three supporting brackets (40) rotating, with respect to the respective direction wheels (6), about said steering axes (41), and hinged to said supporting member (17) about respective fastening axes (42) parallel to the front/rear axis (14) and equally spaced about the front/rear axis (14).

19. A means of transport as claimed in Claim 18, **characterized by** comprising angular connecting means (44) for angularly connecting said supporting brackets (40) and maintaining said steering axes (41) parallel to one another.

20. A means of transport as claimed in Claim 19, **characterized in that** said angular connecting means (44) comprise an angular connecting member (46) connected to the three supporting brackets (40) and lockable angularly to rotate the three supporting brackets (40), during the revolving movement, about the respective fastening axes (42) and with respect to said supporting member (17) by an angle equal and opposite to that about the front/rear axis (14).

21. A means of transport as claimed in Claim 20, **characterized in that** said angular connecting member comprises at least one sun gear (46) coaxial with the front/rear axis (14) and rotating about the front/rear axis (14) with respect to said supporting member (17); said angular connecting means (44) also comprising:
- for each supporting bracket (40), a peripheral pulley (45) angularly fixed with respect to the supporting bracket (40) and about the relative fastening axis (42);
- at least one belt or chain (48) meshing with said sun gear (46) and with at least one relative peripheral pulley (45).

22. A means of transport as claimed in any one of Claims 19 to 21, **characterized by** comprising first adjusting means (70) for maintaining said steering axes (41) vertical in the event of upward and downward tilting.

23. A wheelchair as claimed in any one of Claims 15 to 22, **characterized by** comprising a chair (3; 3a) carried by said frame (2; 2a); said frame comprising a base (19; 19a), and relative mobility means (53) for moving said chair (3; 3a), with respect to said base (19; 19a), forwards in the event of upward tilting, and backwards in the event of downward tilting; third actuating means (60; 60a) being provided to move said chair (3; 3a).

24. A wheelchair as claimed in Claim 23, **characterized in that** said relative mobility means (53) comprise rotation means enabling said chair (3; 3a) to rotate with respect to said base (19; 19a) in the opposite direction to the upward and downward tilt of said frame (2; 2a).

25. A wheelchair as claimed in Claim 23, **characterized in that** said relative mobility means (53) comprise a bar-link drive (53) connecting said chair (3) to said base (19).

26. A wheelchair as claimed in Claim 25, **characterized in that** said bar-link drive (53) comprises, for each side of said frame (2), a pair of straight crossed rods (55, 56) hinged at the ends to said chair (3) and said base (19).

27. A wheelchair as claimed in Claim 26, **characterized in that** said rods (55, 56) are of different lengths.

28. A wheelchair as claimed in any one of Claims 23 to 27, **characterized in that** said third actuating means (60; 60a) comprise an electric motor (62) and a screw-nut screw drive.

29. A wheelchair as claimed in any one of Claims 15 to 28, **characterized by** also comprising powered second adjusting means (65) for adjusting the wheelbase between said front and rear axes (13, 14) in said travelling direction (15).

30. A wheelchair as claimed in Claim 29, **characterized in that** said second adjusting means (65) comprise two extendable rails (66) forming part of said frame (2).

31. A wheelchair as claimed in Claim 30, **characterized in that** said rails (66) are telescopic.

32. A wheelchair as claimed in any one of Claims 29 to 31, when dependent on any one of Claims 22 to 27, **characterized in that** said second adjusting means (65) are activated by said third actuating means (60) to increase said wheelbase in the event of upward and downward tilt of said frame (2).

33. A wheelchair as claimed in Claim 32, **characterized in that** said second adjusting means (65) comprise a connecting rod and crank drive (71) activated by the movement of said relative mobility means (53).

34. A wheelchair as claimed in Claim 33, **characterized in that** said second adjusting means (65) comprise a toothed drive (79) for transmitting rotation from one rod (55) of said relative mobility means (53) to a crank (73) of said connecting rod and crank drive (71).

35. A wheelchair as claimed in Claims 22 and 23, **characterized in that** said first adjusting means (70) are activated by said third actuating means (60).

36. A wheelchair as claimed in Claim 35, **characterized in that** said first adjusting means (70) comprise a lever (74) activated to rotate about the front/rear axis (14) in the opposite direction to the upward or downward tilt of said frame (2).

37. A wheelchair as claimed in Claim 36, **characterized in that** said first adjusting means (70) comprise a toothed drive (79) for transmitting rotation from one rod (55) of said relative mobility means (53) to said lever (74).

38. A wheelchair as claimed in Claim 36 or 37, **characterized in that** said lever is angularly integral with a sun gear (46) of said angular connecting means (44), and is activated to impose rotation of the sun gear about the front/rear axis (14) in the opposite direction to the upward and downward tilt of said frame (2).

39. A wheelchair as claimed in Claim 23, **characterized in that** said third actuating means (60) also activate simultaneously a system for adjusting the wheelbase, and a system for orienting idle direction wheels.
